# FASCICULE DE BREVET EUROPEEN

(11) **EP 2 672 302 B1**
(45) Date de publication et mention de la délivrance du brevet: **18.03.2015**
(21) Numéro de dépôt: 13169347.5
(22) Date de dépôt: 27.05.2013
(51) Int. Cl.: G02B 7/00, G02B 23/00, H01Q 1/28, G01S 7/481, G02B 7/185, G02B 23/06, G02B 26/08

(54) **Procédé de correction des effets thermoélastiques pour télescope spatial et télescope comportant ce procédé**
Verfahren zur Korrektur von Thermo-elastische Effekte in einem optischen Weltraumteleskop und Weltraumteleskop damit
Method for correcting thermo-elastic effects in a space telescope and space telescope using this method

(30) Priorité: 08.06.2012 FR 1201651
(43) Date de publication de la demande: 11.12.2013
(73) Titulaire: Thales, 92200 Neuilly Sur Seine (FR)
(72) Inventeur: Blanc, Jean-François, 06210 MANDELIEU LA NAPOULE (FR); Chanal, Olivier, 06156 CANNES LA BOCCA CEDEX (FR); Liotard, Arnaud, 06130 GRASSE (FR); Losa, Damiana, 06600 ANTIBES (FR); Charbonnel, Catherine, 06550 LA ROQUETTE SUR SIAGNE (FR); Devilliers, Christophe, 06130 GRASSE (FR)
(74) Mandataire: Nguyen, Dominique

(56) Documents cités:
- US-B1- 7 053 828
- JOHN-LEIF JORGENSEN ET AL.: "The PROBA Satellite Star Tracker Performance", SCIENCE DIRECT, vol. 56, no. 1-2, 1 janvier 2005 (2005-01-01), pages 153-159, XP027747109, ACTA ASTRONAUTICA ISSN: 0094-5765, DOI: 10.1016/j.actaastro.2004.09.011
- G. ARIDON ET AL.: "On the Correction Capability of a Deployed Tape-spring Hexapod", SCIENCE DIRECT, vol. 43, no. 8, 10 juin 2008 (2008-06-10), pages 1009-1023, XP022711040, Mechanism and Machine Theory ISSN: 0094-114X, DOI: 10.1016/j.mechmachtheory.2007.07.008
- D. LAUBIER ET AL.: "Feasibility Demonstration of a High Performance Compact Telescope", ACTA ASTRONAUTICA, vol. 46, no. 2-6, 1 janvier 2000 (2000-01-01), pages 279-286, XP026001352, PERGAMON PRESS, ELMSFORD, GB ISSN: 0094-5765, DOI: 10.1016/S0094-5765(99)00212-X

## Description

La présente invention concerne un procédé et un dispositif de correction des effets thermo-élastiques, notamment pour télescope spatial et un télescope comportant un tel dispositif. Elle s'applique notamment aux télescopes embarqués dans des satellites spatiaux.

Dans le contexte des instruments d'observation à haute résolution de future génération, il existe un besoin d'accroître la résolution et les performances associées tout en diminuant leur encombrement. Les performances de qualité image concernées sont la fonction de transfert de modulation communément désignée par l'acronyme « FTM », et la localisation. Pour la suite, le terme « instruments » désigne l'ensemble des dispositifs formant un télescope spatial, c'est-à-dire le télescope lui-même, au moins un plan focal et des dispositifs opto-mécaniques ou des dispositifs de mesures spécifiques.

La FTM est représentative de la qualité de l'image produite par les instruments, et son amélioration suppose des corrections. La localisation est représentative de la capacité des instruments à déterminer les coordonnées d'un point visé dans un référentiel du satellite. L'amélioration de la localisation suppose simplement une bonne connaissance de celle-ci.

L'amélioration de la résolution suppose la réalisation d'une pupille de télescope plus grande impliquant des miroirs de plus grands diamètres. De fait, les miroirs utilisés sont de plus en plus sensibles, d'une finesse relative de plus en plus grande, et par conséquent moins stables. En parallèle, par souci d'économie, les lanceurs se doivent d'être de plus en plus petits, impliquant un besoin en instruments de plus en plus compacts. Ce phénomène accroît encore la sensibilité des instruments.

La sensibilité accrue des instruments entraîne une dérive de leurs performances, notamment dans une perspective de long terme, et impose typiquement que ceux-ci puissent être à nouveau réglés en vol. En outre, la sensibilité accrue des instruments entraîne un assujettissement fort de ceux-ci aux variations de flux thermique à l'échelle orbitale, entraînant des instabilités de performances majeures, notamment en termes de FTM et de localisation. Les variations thermo-élastiques ont pour origine les variations de flux que voit la cavité du télescope : d'origine terrestre, spatiale ou solaire, selon ce que voit la cavité. L'impact de ces effets sur les performances de qualité image peuvent être intenses, particulièrement pour des télescopes compacts dans lesquels l'entre-verre est réduit, ou encore pour des télescopes déployables, en raison de leur plus forte instabilité structurelle.

Selon des techniques connues, les instruments peuvent être dimensionnés de manière à présenter une sensibilité - donc un encombrement - compatible des instabilités allouées. De la même manière, les technologies pour la réalisation des instruments peuvent être choisies pour leur compatibilité avec ces instabilités.

Dans le but de rendre les instruments plus compacts afin de diminuer les coûts de lancement, tout en augmentant leurs performances, des techniques connues permettent également de corriger les défauts lorsque le satellite est en orbite. Ces techniques sont mises en oeuvre dans des instruments dits « actifs ». Un instrument actif comprend typiquement un dispositif de mesure des défauts, des dispositifs de correction, tels que des dispositifs assurant le déplacement de miroirs, ou la déformation de la surface optique, etc. Le cycle de correction dépend de la fréquence d'évolution des défauts.

Les défauts liés aux évolutions d'environnement entre le sol et le vol, tels que les effets liés à la gravité ou les effets liés aux charges de lancement sont à corriger en début de vie orbitale. Les défauts liés à l'évolution à long terme en vol, notamment dus aux phénomènes de radiations et au vieillissement sont à corriger suivant des cycles longs, typiquement annuels. Les effets à court terme à l'échelle orbitale nécessitent une boucle de correction rapide complexe, réalisant un asservissement quasiment en temps réel. Cette boucle de correction rapide doit en quelques dizaines de secondes mesurer les défauts, calculer la correction à appliquer et corriger les défauts, tout en assurant la mission nominale du télescope consistant en des prises d'images.

Les effets à court terme sont essentiellement d'origine thermo-élastique.

Un but de la présente invention est de pallier au moins les inconvénients précités, en proposant un procédé assurant la prise en compte de l'effet des dérives thermo-élastiques à l'échelle orbitale sur la FTM mais également avantageusement sur la localisation, c'est-à-dire sur la stabilité de la ligne de visée.

A cet effet, l'invention a pour objet un procédé de correction des effets thermo-élastiques sur des paramètres de performances d'un télescope embarqué dans un satellite spatial, comprenant une première étape, préalable au vol du satellite, consistant à déterminer, a priori, une correction des effets thermo-élastiques en utilisant un modèle préalable de variations des effets thermo-élastiques à l'échelle orbitale et un algorithme de détermination de correction alimenté par des données de programmation du satellite spatial, et une deuxième étape de correction en vol, consistant à partir de la correction déterminée a priori, à établir des messages de commande de moyens de correction des paramètres de performances dudit télescope.

Dans un mode de réalisation de l'invention, le procédé de correction peut comprendre en outre une troisième étape de recalage en vol consistant à mesurer en vol des paramètres de performances du télescope et à réaliser un recalage du modèle préalable de variations des effets thermo-élastiques en fonction des mesures réalisées, le recalage étant réalisé à partir de la différence entre les paramètres de performance dans le modèle préalable et les paramètres de performance correspondants issus des mesures.

Dans un mode de réalisation de l'invention, lesdits paramètres de performance peuvent comprendre la focalisation du télescope.

Dans un mode de réalisation de l'invention, le modèle préalable de variation des effets thermo-élastiques est un modèle prédictif théorique périodique à pulsation orbitale.

Dans un mode de réalisation de l'invention, lesdits paramètres de performance peuvent comprendre la stabilité de la ligne de visée du télescope.

Dans un mode de réalisation de l'invention, lesdites mesures peuvent comprendre la mesure d'au moins un paramètre de Zernike.

Dans un mode de réalisation de l'invention, lesdites mesures peuvent être réalisées lors de chaque orbite du satellite.

Dans un mode de réalisation de l'invention, lesdites mesures peuvent être réalisées lors d'une première demi-orbite du satellite, et le recalage du modèle préalable de variations des effets thermo-élastiques peut être réalisé lors d'une seconde demi-orbite du satellite.

Dans un mode de réalisation de l'invention, lesdites mesures peuvent être réalisées sur des périodes temporelles prédéterminées.

La présente invention a également pour objet un dispositif de correction des effets thermo-élastiques sur des paramètres de performances d'un télescope spatial embarqué dans un satellite, le dispositif étant configuré pour la mise en oeuvre du procédé de correction selon l'un quelconque des modes de réalisation présentés.

Dans un mode de réalisation de l'invention, le dispositif de correction peut comprendre des moyens de calcul comportant un modèle préalable de variations des effets thermo-élastiques et un algorithme de détermination de correction alimenté par des données de programmation du satellite spatial et des moyens de correction des paramètres de performance agissant sur le télescope.

Dans un mode de réalisation de l'invention, le dispositif de correction peut comprendre en outre des moyens de mesure en vol des paramètres de performance du télescope.

Dans un mode de réalisation de l'invention, les moyens de correction peuvent comprendre des moyens de déplacement d'au moins un miroir du télescope configurés pour assurer le déplacement et/ou l'orientation dudit au moins un miroir.

Dans un mode de réalisation de l'invention, les moyens de correction peuvent comprendre des moyens de déformation d'au moins un miroir du télescope.

La présente invention a également pour objet un télescope pour satellite spatial comprenant un dispositif de correction selon l'un quelconque des modes de réalisation présentés.

D'autres caractéristiques et avantages de l'invention apparaîtront à la lecture de la description, donnée à titre d'exemple, faite en regard des dessins annexés qui représentent :
- la figure 1, un schéma illustrant de manière synoptique la structure d'un instrument dans le contexte de la présente invention ;
- la figure 2, un schéma illustrant un exemple d'évolution de l'attitude d'un satellite autour de la terre ;

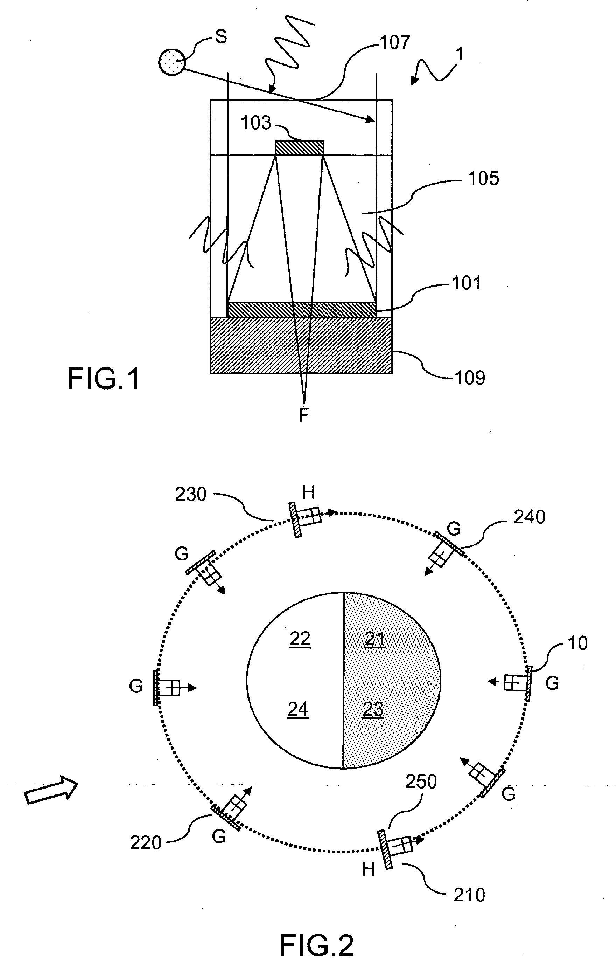

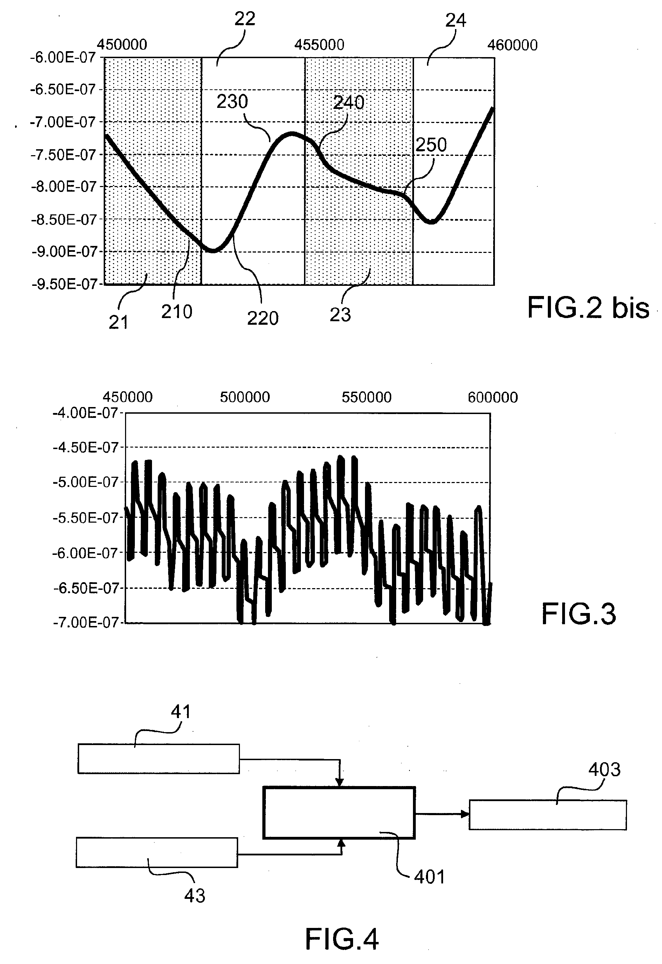

- la figure 2bis, un exemple d'une courbe représentant l'évolution de la focalisation sur une orbite d'un satellite ;
- la figure 3, un exemple d'une courbe représentant l'évolution de la focalisation sur une pluralité d'orbites d'un satellite ;
- la figure 4, un diagramme illustrant de manière synoptique le principe d'un procédé de correction selon un exemple de réalisation de la présente invention ;

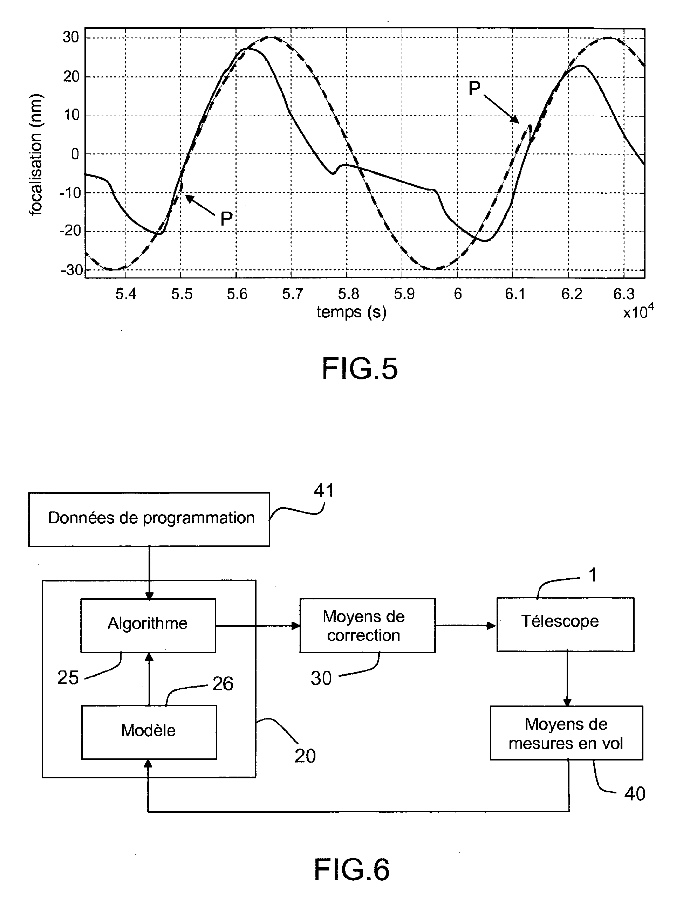

- la figure 5 : un exemple de recalage du modèle préalable de variation de la focalisation une fois par orbite, selon l'invention ;
- La figure 6 : un schéma synoptique d'un dispositif de correction des effets thermo-élastiques, selon l'invention.

La figure 1 présente un schéma illustrant de manière synoptique la structure typique d'un instrument dans le contexte de la présente invention.

D'une manière typique, un instrument comprend un télescope 1 comprenant un miroir primaire 101, un miroir secondaire 103, le miroir primaire 101 étant disposé sensiblement au fond d'une cavité avant 105 ou « cavité du télescope ». Le télescope 1 comprend également sensiblement en sa partie supérieure un baffle solaire 107. Le télescope 1 comprend en outre un banc optique 109, formant une structure supportant le miroir primaire 101 et regroupant en sa partie inférieure d'autres éléments optiques, non représentés sur la figure. La configuration des miroirs primaire 101 et secondaire 103 définit un foyer image F en lequel la lumière est focalisée, le foyer image F étant typiquement situé dans sa partie inférieure.

Sur la figure 1, les différents flux thermiques : en provenance de l'espace et en interne de la cavité du télescope, sont représentés par des traits en zig-zags.

Ainsi que cela est décrit précédemment, les dérives thermiques sont dues aux variations de flux internes à la cavité avant 105 du télescope 1. Celles-ci dépendent principalement de l'attitude du satellite, c'est-à-dire à la direction que voit la cavité avant 105. En pointage géocentrique, c'est-à-dire lorsque le satellite 10 pointe vers la Terre, la cavité avant 105 est soumise à un flux issu de la réflexion des rayonnements solaires sur la surface de la Terre, dit « flux albedo » ainsi que le flux thermique de la terre ; en pointage héliocentrique, c'est-à-dire lorsque le satellite 10 pointe ses générateurs solaires vers le soleil S, la cavité avant 105 est soumise à un flux dit « flux espace ». Le satellite passe successivement sur des zones terrestres de jour et de nuit.
Les prises de vues visibles ont lieu sur la demi-orbite jour, hors des zones polaires. Typiquement, entre les prises de vue, le satellite est repositionné en configuration héliocentrique afin de maximiser la captation de l'énergie solaire.

La figure 2 illustre un exemple d'évolution de l'attitude d'un satellite autour de la terre, ce dernier étant lors d'une orbite principalement en pointage géocentrique, représenté sur la figure 2 par la lettre G, et ponctuellement en pointage héliocentrique, représenté par la lettre H. La figure 2bis illustre l'évolution de la focalisation sur une orbite complète du satellite.

Il est considéré dans le cadre de la présente invention que les effets des variations de flux internes à la cavité avant 105 sont dépendantes des périodes temporelles définissant les attitudes du satellite, c'est-à-dire du plan de programmation de ce dernier.

Il est à observer que la focalisation est un des paramètres optiques les plus influents et les plus sensibles de la performance de FTM.

En référence aux figures 2 et 2bis, la focalisation, représentée en ordonnées et exprimée en mètres, évolue en fonction du temps, représenté en abscisses, globalement de manière périodique sur une orbite du satellite. Dans une première période de nuit 21, la focalisation diminue de manière continue, jusqu'à un premier point de basculement 210 du satellite, au niveau duquel celui-ci passe en un pointage héliocentrique, ce basculement coïncidant sensiblement avec le début d'une première période de jour 22. Durant la première période de jour 22, après un premier basculement géocentrique 220, la focalisation augmente de manière continue jusqu'à un deuxième point de basculement 230 du satellite, au niveau duquel celui-ci passe à nouveau en un pointage héliocentrique, ce basculement coïncidant sensiblement avec le début d'une deuxième période de nuit 23. En début de la deuxième période de nuit 23, après un basculement géocentrique 240, la focalisation diminue de manière continue, jusqu'à un troisième point de basculement 250 du satellite, au niveau duquel celui-ci passe à nouveau en un pointage héliocentrique, ce basculement coïncidant sensiblement avec le début d'une deuxième période de jour 24. Durant la deuxième période de jour 24, le cycle se répète. Les quatre périodes 21, 22, 23, 24 illustrent deux orbites successives sur un exemple de l'attitude orbitale du satellite d'observation.

Il est à noter que les modes de réalisation décrits s'appliquent à des orbites basses de satellites, du type communément désigné par le sigle LEO. Il s'agit là d'exemples non limitatifs de la présente invention, étant notamment entendu que la présente invention peut également s'appliquer à des satellites évoluant selon des orbites hautes, du type communément désigné par le terme GEO ou l'acronyme MEO. En d'autres termes, la présente invention peut s'appliquer à des satellites dits défilants ou non défilants.

La figure 3, décrite ci-après, illustre l'évolution de la focalisation sur une pluralité d'orbites du satellite.

En référence à la figure 3, la focalisation représentée en ordonnées et exprimée en mètres, évolue en fonction du temps, représenté en abscisses. L'évolution de la focalisation est globalement périodique sur une pluralité d'orbites chargée différemment, c'est-à-dire présentant un nombre de transitions G/H variable suivant la programmation réalisée. Sur chacune de ces orbites, la focalisation évolue de manière périodique d'une manière similaire à l'évolution sur une orbite représentée en figure 2bis. L'évolution basse fréquence sur-imposée est due à l'évolution de la durée cumulée relative entre le pointage héliocentrique et le pointage de type géocentrique. Toutes ces évolutions sont prédictibles et dépendent des paramètres de programmation du satellite.

Il est proposé par la présente invention, qu'une correction soit apportée, notamment au paramètre de focalisation, la correction se basant sur les évolutions de la focalisation au cours du temps. Les courbes d'évolution de la focalisation, ou d'autres paramètres de qualité image du télescope, peuvent en effet être élaborées avec précision, à partir de la connaissance de la mission du satellite, au moyen d'outils connus de modélisation couplée thermique, mécanique et optique. La connaissance de la mission du satellite comprend une connaissance des positions sur orbite - habituellement désignées par le sigle PSO - de celui-ci en fonction de dates, ainsi qu'une connaissance des angles de basculement du satellite. Ces données peuvent être traduites sous la forme de données de programmation du satellite, pouvant nourrir un algorithme de détermination de correction a priori des effets thermo-élastiques.

Un procédé de correction selon la présente invention est illustré par la figure 4, décrite ci-après.

En référence à la figure 4, un procédé de correction peut comprendre une étape, préalable au vol du satellite, de détermination a priori de la correction des effets thermo-élastiques 401, mettant en oeuvre un algorithme 25 de détermination de correction tel qu'introduit ci-dessus. L'algorithme 25 de détermination reçoit en entrée des données de programmation 41 du satellite, et permet la mise en oeuvre d'une définition préalable d'un modèle 26 des variations thermo-élastiques à l'échelle orbitale. Le procédé de correction comprend en outre une étape de correction 403 en vol, établissant des messages de commande de moyens de correction 30 de l'instrument. Les moyens de correction 30 peuvent par exemple comprendre des moyens de déplacement des miroirs du télescope 1 les uns par rapport aux autres, par exemple des moyens de déplacement du miroir secondaire 103 du télescope 1, en référence à la figure 1 décrite ci-dessus. Les moyens de correction 30 peuvent également comprendre des moyens pour déformer le miroir primaire 101, ou tout autre élément optique.

Ainsi, le procédé de correction peut être défini a priori, dans une étape préalable au vol, par exemple au sol, consistant à déterminer la correction à appliquer au télescope 1 à partir de la connaissance des données de programmation 41 du satellite, et l'effet des dérives thermo-élastiques sur les paramètres de performance du télescope, tels que la focalisation, peut être corrigé en vol en permanence à partir des données de programmation 41 entrées en une étape préalable au vol.

Avantageusement, sur la base des mêmes données de programmation 41, le procédé de correction peut permettre en outre la prédiction de l'effet des dérives thermo-élastiques sur la ligne de visée, c'est-à-dire sur la stabilité de la localisation.

Avantageusement, le procédé de correction peut comprendre en outre une étape de recalage 43 en vol de l'algorithme de correction, afin de pallier aux incertitudes de prédiction, par rapport aux données établies de manière préalable. L'étape de recalage 43 consistant à recaler le modèle préalable 26 de variations des effets thermo-élastiques en fonction de mesures réalisées par des moyens de mesure 40 appropriés, ou plus précisément en fonction de la différence entre les paramètres de performance dans le modèle préalable 26 et les paramètres de performance correspondants issus des mesures réalisées par les moyens de mesure 40.

Par exemple, le modèle préalable de variation relatif à la FTM peut être recalé au moyen de mesures de focalisation et plus généralement par des mesures spécifiques permettant de restituer l'ensemble des coefficients de Zernike. Le modèle préalable de variation relatif à la localisation peut être recalé à partir de mesures de l'écart entre des lignes de visée, entre la ligne de visée dite « instrument » et la ligne de visée des senseurs d'étoiles, par exemple au moyen d'acquisitions sur étoiles.

Le recalage effectué lors de l'étape de recalage 43 peut être réalisé suivant différentes stratégies. Par exemple, selon une première stratégie de recalage, dite de recalage à cycle long, le recalage peut être effectué sur des périodes dédiées déterminées, par exemple au moyen d'un calibrage en vol, sur une base annuelle.

Selon une deuxième stratégie de recalage, dite de recalage à cycle court, le recalage peut être effectué par exemple une fois par orbite, par exemple en réalisant des mesures au cours d'une demi-orbite de jour, et en réalisant un calcul des nouvelles données de programmation lors d'une demi-orbite de nuit.

La figure 5 illustre un exemple de recalage du modèle préalable 26 de variation de la focalisation, une fois par orbite. L'évolution réelle de la focalisation est représentée en trait plein. Le modèle préalable de variation représenté en traits pointillés, est un modèle prédictif théorique périodique, par exemple sinusoïdal, à pulsation orbitale. Un recalage P du modèle peut être réalisé toutes les N orbites, où N est un entier supérieur ou égal à un, N étant sélectionné en fonction de la précision de la correction recherchée, dès qu'une mesure de défocalisation est disponible.

La stratégie de recalage peut être choisie en fonction du concept du télescope considéré, et de la précision de la correction recherchée.

Par exemple, dans le cadre de la deuxième stratégie de recalage précitée, c'est-à-dire à cycle court, des mesures relativement fréquentes sont nécessaires, et celles-ci peuvent par exemple être réalisées par des moyens de mesures spécifiques disposés à bord du satellite, tels qu'un analyseur de surface d'onde par exemple.

Par exemple, dans le cadre de la première stratégie de recalage précitée, c'est-à-dire à cycle long, il n'est pas nécessaire de disposer de dispositifs de mesure supplémentaires par rapport aux dispositifs de mesure habituellement embarqués dans les instruments connus associés à des télescopes spatiaux, et il n'est notamment pas nécessaire de disposer de dispositifs spécifiques tels que des analyseurs de surface d'onde à l'instar de la deuxième stratégie de recalage, et un nombre de compensateurs limité peut suffire, par exemple un compensateur de focalisation.

La présente invention a également pour objet un dispositif de correction des effets thermo-élastiques notamment pour un télescope spatial, comme représenté sur la figure 6, mettant en oeuvre un procédé tel que dans les modes de réalisation décrits précédemment. L'algorithme de correction 25 peut par exemple être mis en oeuvre dans des moyens de calcul dédiés 20 comprenant un modèle préalable de variations des effets thermo-élastiques pouvant comporter par exemple des tables de correspondances donnant les lois d'évolution entre les commandes des actionneurs et les paramètres d'attitude du satellite, la gestion pouvant être réalisée par un calculateur dédie ou par un calculateur existant dans le satellite 10. Un dispositif de correction selon la présente invention peut comprendre en outre des moyens de correction 30 associés aux moyens de calcul 20 via des moyens d'interfaçage appropriés. Un dispositif de correction selon la présente invention peut en outre comprendre des moyens de mesure 40 tels que décrits précédemment.

La présente invention a également pour objet un télescope spatial, par exemple tel que décrit précédemment en référence à la figure 1, comprenant un dispositif de correction selon l'un des modes de réalisation décrits.

Un avantage de la présente invention est qu'elle requiert la mise en oeuvre d'un algorithme de correction des effets thermo-élastiques de conception simple et permettant un recalage en vol des instruments.

Un autre avantage de la présente invention est qu'elle permet une correction en continu de paramètres de qualité image tels que la focalisation, sur l'orbite du satellite.

Un autre avantage de la présente invention est qu'elle permet d'accroître la durée entre la mesure et la correction. Typiquement, cette durée peut être choisie courte, par exemple de l'ordre de 30 minutes dans le cadre de la stratégie à cycle court précitée, ou bien très longue, par exemple de l'ordre de six mois voire un an, dans le cadre de la stratégie à cycle long précitée.

Un autre avantage de la présente invention selon certains de ses modes de réalisation, est qu'elle permet une bonne connaissance de la stabilité de la ligne de visée, celle-ci étant déterminante dans le cadre de l'utilisation de systèmes d'observation de très haute résolution.

## Revendications

1. Procédé de correction des effets thermo-élastiques sur des paramètres de performances d'un télescope (1) embarqué dans un satellite spatial, **caractérisé en ce qu'il** comprend une première étape, préalable au vol du satellite, consistant à déterminer, a priori, une correction des effets thermo-élastiques (401) en utilisant un modèle préalable (26) de variations des effets thermo-élastiques à l'échelle orbitale et un algorithme (25) de détermination de correction alimenté par des données de programmation (41) du satellite spatial, et une deuxième étape de correction (403) en vol, consistant à partir de la correction déterminée a priori, à établir des messages de commande de moyens de correction (30) des paramètres de performances dudit télescope (1).

2. Procédé de correction selon la revendication 1, **caractérisé en ce qu'il** comprend en outre une troisième étape de recalage (43) en vol consistant à mesurer en vol des paramètres de performances du télescope (1) et à réaliser un recalage du modèle préalable de variations des effets thermo-élastiques en fonction des mesures réalisées, le recalage étant réalisé à partir de la différence entre les paramètres de performance dans le modèle préalable et les paramètres de performance correspondants issus des mesures.

3. Procédé de correction selon la revendication 2, **caractérisé en ce que** lesdits paramètres de performance comprennent la focalisation du télescope (1).

4. Procédé de correction selon la revendication 3, **caractérisé en ce que** le modèle préalable de variation des effets thermo-élastiques est un modèle prédictif périodique

5. Procédé de correction selon la revendication 2, **caractérisé en ce que** lesdits paramètres de performance comprennent la stabilité de la ligne de visée du télescope (1).

6. Procédé de correction selon la revendication 2, **caractérisé en ce que** lesdites mesures comprennent la mesure d'au moins un paramètre de Zernike.

7. Procédé de correction selon la revendication 2, **caractérisé en ce que** lesdites mesures sont réalisées lors de chaque orbite du satellite.

8. Procédé de correction selon la revendication 7, **caractérisé en ce que** lesdites mesures sont réalisées lors d'une première demi-orbite du satellite, et le recalage du modèle préalable de variations des effets thermo-élastiques est réalisé lors d'une seconde demi-orbite du satellite.

9. Procédé de correction selon la revendication 2, **caractérisé en ce que** lesdites mesures sont réalisées sur des périodes temporelles prédéterminées.

10. Dispositif de correction des effets thermo-élastiques sur des paramètres de performances d'un télescope (1) spatial embarqué dans un satellite, **caractérisé en ce qu'il** est configuré pour la mise en oeuvre d'un procédé de correction suivant l'une quelconque des revendications précédentes.

11. Dispositif de correction selon la revendication 10, **caractérisé en ce qu'il** comprend des moyens de calcul (20) comportant un modèle préalable (26) de variations des effets thermo-élastiques et un algorithme (25) de détermination de correction alimenté par des données de programmation (41) du satellite spatial et des moyens de correction (30) des paramètres de performance agissant sur le télescope (1).

12. Dispositif de correction selon la revendication 11, **caractérisé en ce qu'il** comprend en outre des moyens de mesure en vol (40) des paramètres de performance du télescope (1).

13. Dispositif de correction selon la revendication 11, **caractérisé en ce que** les moyens de correction comprennent des moyens de déplacement d'au moins un miroir (101, 103) du télescope (1) assurant le déplacement et/ou l'orientation dudit au moins un miroir (101, 103).

14. Dispositif de correction selon l'une quelconque des revendications 12 et 13, **caractérisé en ce que** les moyens de correction (30) comprennent des moyens de déformation d'au moins un miroir (101, 103) du télescope.

15. Télescope (1) pour satellite spatial, **caractérisé en ce qu'il** comprend un dispositif de correction selon l'une quelconque des revendications 10 à 14.

## Patentansprüche

1. Korrekturverfahren der thermoelastischen Effekte auf Leistungsparameter eines in einen Weltraumsatelliten eingebauten Teleskops (1), **dadurch gekennzeichnet, dass** es vor dem Flug des Satelliten einen ersten Schritt umfasst, der darin besteht, a priori, unter Verwendung eines vorherigen Variationsmodells (26) der thermoelastischen Effekte auf Orbitalebene eine Korrektur der thermoelastischen Effekte (401) und einen Korrekturbestimmungsalgorithmus (25), der mit Programmierungsdaten (41) des Weltraumsatelliten versorgt wird, zu bestimmen, und einen zweiten Korrekturschritt (403) im Flug, der darin besteht, ausgehend von der a priori, bestimmten Korrektur Steuermeldungen von Korrektmmitteln (30) der Leistungsparameter des Teleskops (1) zu erstellen.

2. Korrekturverfahren nach Anspruch 1, **dadurch gekennzeichnet, dass** es ferner einen dritten Schritt der Nachstellung (43) im Flug umfasst, der darin besteht, im Flug Leistungsparameter des Teleskops (1) zu messen und eine Nachstellung des vorherigen Variationsmodells der thermoelastischen Effekte in Abhängigkeit von den durchgeführten Messungen durchzuführen, wobei die Nachstellung ausgehend von der Differenz zwischen den Leistungsparametern im vorherigen Modell und den entsprechenden Leistungsparametern, die aus den Messungen hervorgegangen sind, erfolgt.

3. Korrekturverfahren nach Anspruch 2, **dadurch gekennzeichnet, dass** die Leistungsparameter die Fokussierung des Teleskops (1) umfassen.

4. Korrekturverfahren nach Anspruch 3, **dadurch gekennzeichnet, dass** das vorherige Variationsmodell der thermoelastischen Effekte ein periodisches Prognosemodell ist.

5. Korrekturverfahren nach Anspruch 2, **dadurch gekennzeichnet, dass** die Leistungsparameter die Stabilität der Visierlinie des Teleskops (1) umfassen.

6. Korrekturverfahren nach Anspruch 2, **dadurch gekennzeichnet, dass** die Messungen die Messung mindestens eines Zernike-Parameters umfassen.

7. Korrekturverfahren nach Anspruch 2, **dadurch gekennzeichnet, dass** die Messungen bei jeder Satellitenbahn durchgeführt werden.

8. Korrekturverfahren nach Anspruch 7, **dadurch gekennzeichnet, dass** die Messungen bei einer ersten halben Satellitenbahn erfolgen und das Nachstellen des vorherigen Variationsmodells der thermoelastischen Effekte bei einer zweiten halben Satellitenbahn erfolgt.

9. Korrekturverfahren nach Anspruch 2, **dadurch gekennzeichnet, dass** die Messungen über vorbestimmte Zeitabschnitte durchgeführt werden.

10. Korrekturvorrichtung der thermoelastischen Effekte auf Leistungsparameter eines in einen Satelliten eingebauten Weltraumteleskops (1), **dadurch gekennzeichnet, dass** sie für die Umsetzung eines Korrekturverfahrens nach einem der vorangehenden Ansprüche konfiguriert ist.

11. Korrekturvorrichtung nach Anspruch 10, **dadurch gekennzeichnet, dass** sie Rechenmittel (20) umfasst, die ein vorheriges Variationsmodell (26) der thermoelastischen Effekte und einen mit Programmierungsdaten (41) des Weltraumsatelliten versorgten Korrekturbestimmungsalgorithmus (25) und Korrekturmittel (30) der auf das Teleskop (1) einwirkenden Leistungsparameter aufweisen.

12. Korrekturvorrichtung nach Anspruch 11, **dadurch gekennzeichnet, dass** sie ferner Messmittel im Flug (40) der Leistungsparameter des Teleskops (1) umfasst.

13. Korrekturvorrichtung nach Anspruch 11, **dadurch gekennzeichnet, dass** die Korrekturmittel Bewegungsmittel mindestens eines Spiegels (101, 103) des Teleskops (1) umfassen, die die Bewegung und/oder die Ausrichtung des mindestens einen Spiegels (101, 103) sichern.

14. Korrekturvorrichtung nach einem der Ansprüche 12 und 13, **dadurch gekennzeichnet, dass** die Korrekturmittel (30) Verformungsmittel mindestens eines Spiegels (101, 103) des Teleskops umfassen.

15. Teleskop (1) für Weltraumsatelliten, **dadurch gekennzeichnet, dass** es eine Korrekturvorrichtung nach einem der Ansprüche 10 bis 14 umfasst.

## Claims

1. A method for correcting the thermoelastic effects on performance parameters of a telescope (1) on board a space satellite, **characterised in that** it comprises a first step, prior to the flight of the satellite, consisting of determining, a prior, a correction of the thermoelastic effects (401) by using a prior model (26) of variations of the thermoelastic effects on the orbital scale and an algorithm (25) for determining correction fed by programming data (41) of the space satellite, and a second step of making a correction (403) in flight, consisting of establishing control messages, on the basis of the correction determined a priori, from means (30) for correcting the performance parameters of said telescope (1).

2. The correction method of Claim 1, **characterised in that** it further comprises a third step of resetting (43) in flight consisting of measuring, in flight, performance parameters of the telescope (1) and resetting the prior model of variations of the thermoelastic effects on the basis of measurements taken, the resetting being performed on the basis of the difference between the performance parameters in the prior model and the corresponding performance parameters originating from the measurements.

3. The correction method according to Claim 2, **characterised in that** said performance parameters include the focussing of the telescope (1).

4. The correction method according to Claim 3, **characterised in that** the prior model of variation of the thermoelastic effects is a periodic predictive model.

5. The correction method according to Claim 2, **characterised in that** said performance parameters include the stability of the line of sight of the telescope (1).

6. The correction method according to Claim 2, **characterised in that** said measurements include the measurement of at least one Zernike parameter.

7. The correction method according to Claim 2, **characterised in that** said measurements are taken during each orbit of the satellite.

8. The correction method according to Claim 7, **characterised in that** said measurements are taken during a first half-orbit of the satellite, and the resetting of the prior model of variations of the thermoelastic effects is performed during a second half-orbit of the satellite.

9. The correction method according to Claim 2, **characterised in that** said measurements are taken over predetermined time periods.

10. A device for correcting thermoelastic effects on performance parameters of a space telescope (1) on board a satellite, **characterised in that** it is configured for the implementation of a correction method according to any of the preceding claims.

11. The correction device according to Claim 10, **characterised in that** it comprises calculation means (20) including a prior model (26) of variations of the thermoelastic effects and an algorithm (25) for determining correction fed by programming data (41) of the space satellite and means for correcting (30) the performance parameters acting on the telescope (1).

12. The correction device according to Claim 11, **characterised in that** it further comprises in-flight means (40) for measuring the performance parameters of the telescope (1).

13. The correction device according to Claim 11, **characterised in that** the correction means comprise means for moving at least one mirror (101, 103) of the telescope (1) ensuring the movement and/or orientation of said at least one mirror (101, 103).

14. The correction device according to either of Claims 12 and 13, **characterised in that** the correction means (30) comprise means for deforming at least one mirror (101, 103) of the telescope.

15. A telescope (1) for a space satellite, **characterised in that** it comprises a correction device according to any of Claims 10 to 14.
